# EUROPÄISCHE PATENTSCHRIFT

(11) **EP 2 663 514 B1**
(45) Veröffentlichungstag und Bekanntmachung des Hinweises auf die Patenterteilung: **11.07.2018**
(21) Anmeldenummer: 12701236.7
(22) Anmeldetag: 09.01.2012
(51) Int. Cl.: B65G 69/32

(54) **TORABDICHTUNG FÜR VERLADEÖFFNUNGEN**
DOOR SEALER FOR LOADING OPENINGS
SAS D'ÉTANCHÉITÉ POUR OUVERTURES DE CHARGEMENT

(30) Priorität: 10.01.2011 DE 202011000049 U
(43) Veröffentlichungstag der Anmeldung: 20.11.2013
(73) Patentinhaber: Novoferm Nederland B.V., 4181 CA Waardenburg (NL)
(72) Erfinder: VENNER, Godefridus, Joseph, Marie, NL-6086 PA Neer (NL)
(74) Vertreter: Lorenz, Bernd Ingo Thaddeus
(86) Internationale Anmeldenummer: PCT/EP2012/050267
(87) Internationale Veröffentlichungsnummer: WO 2012/095400

(56) Entgegenhaltungen:
- EP-A2- 1 550 624
- DE-A1- 1 922 023
- DE-A1- 19 945 333
- US-A- 4 015 380
- US-A- 5 592 792
- US-A1- 2010 269 427

## Beschreibung

Die Erfindung betrifft eine Anordnung mit einer Verladeöffnung, einer die Verladeöffnung umgebenden Wand und einer Torabdichtung zur Abdichtung gegen Witterungseinflüsse zwischen der die Verladeöffnung umgebenden Wand und einem vor der Verladeöffnung positionierten Fahrzeug. Unter den Begriff Fahrzeug sollen LKWs, abnehmbare LKW-Aufsätze, Busse, Kleintransporter und Kastenwagen fallen.

Aus der Praxis ist eine Torabdichtung aus eindrückbaren Schaumstoffkissen bekannt, die an drei Seiten neben und über einer gebäudeseitigen Verladeöffnung angeordnet sind. Die Schaumstoffkissen sind auf einer Holzunterkonstruktion befestigt und mit verstärkten Kunststofftüchern verkleidet. Sie formen eine Abdichtung zwischen einem LKW-Aufbau und einer die Verladeöffnung umgebenden Gebäudewand und bieten Schutz vor Zugluft, Regen und Wind. US 4,015,380 offenbart eine Anordnung nach dem Oberbegriff des Anspruchs 1, wobei die Torabdichtung Schaumstoffkissen aufweist, die an den Seiten der Verladeöffnung angeordnet sind und von einer wetterfesten Plane abgedeckt sind. Die Plane ist lokal mit dem Schaumstoffkissen verbunden und verläuft in Wellen.

Aus DE 199 45 333 A1 ist eine Torabdichtung für Verladeöffnungen bekannt, die aus aufblasbaren doppelwandigen Bälgen besteht.

Die DE 19 22 023 A1 beschreibt eine Torabdichtung für Verladeöffnungen, die aus lamellenartigen Streifen aufgebaut ist. Die lamellenartigen Streifen sind dicht bei dicht nebeneinander angeordnet und an den Seiten, d. h. senkrechten Rändern der Wandöffnung, waagerecht ausgerichtet.

Unbefriedigend ist bisher die Abdichtung an der Rückseite von Lieferwagen und Kleintransportern, die unter anderem für den Paketdienst und Botenvertrieb in Städten und Regionen eingesetzt werden. Grund für die unzureichende Abdichtung ist die große Verschiedenheit der Karosserieformen an diesen Fahrzeugen. Hinzu kommt das Problem, dass Scharniere an der geöffneten Fahrzeugrückseite, Türfesthalter, Stoßfänger und andere Fahrzeugteile an der Fahrzeugrückseite vorstehen. Die bekannten Torabdichtungen sind nicht in der Lage, derartig vorstehende Fahrzeugteile so zu umschließen, dass die Dichtungselemente auch dicht an den übrigen Flächen der Fahrzeugrückseite anliegen.

Vor diesem Hintergrund liegt der Erfindung die Aufgabe zugrunde, eine Torabdichtung für Verladeöffnungen anzugeben, die sehr flexibel ist und ausreichend Raum bietet für vorstehende Fahrzeugteile, z. B. vorstehende Scharniere, Stoßfänger und dergleichen.

Gegenstand der Erfindung und Lösung dieser Aufgabe ist eine Anordnung nach Anspruch 1. Erfindungsgemäß weist die Dichtung einen an der Wand befestigbaren Rücken und eine Mehrzahl parallel ausgerichteter flexibler Lippen auf, die an ihrer Rückseite mit dem Rücken verbunden sind und fahnenförmig vorstehen. Die Dichtung ist zweckmäßig an drei Seiten neben und über der Verladeöffnung angeordnet. Im Rahmen der Erfindung liegt es, dass die Dichtung sich nicht über die gesamte Höhe und/oder die gesamte Breite der Verladeöffnung erstreckt, sondern nur in mehreren Abschnitten am Umfang der Verladeöffnung angeordnet ist. Die Anordnung der Dichtung kann insbesondere auf solche Abschnitte am Umfang der Verladeöffnung beschränkt werden, die mit stark gekrümmten Karosserieabschnitten eines Fahrzeuges und/oder vorstehenden Fahrzeugteilen an der Fahrzeugrückseite in Kontakt kommen, während in anderen Abschnitten am Umfang der Verladeöffnung Kissendichtungen nach dem Stand der Technik vorgesehen werden. Die erfindungsgemäße Dichtung kann mit konventionellen Dichtungen beliebig kombiniert werden. Insbesondere kann die Dichtung auch unterhalb der Verladeöffnung angeordnet werden.

Die flexiblen Lippen der Dichtung sind vorzugsweise senkrecht zur Projektionsfläche der Verladeöffnung ausgerichtet und überbrücken einen Abstand zwischen der die Verladeöffnung umgebenden Gebäudefläche und einem vor der Verladeöffnung positionierten Fahrzeug. Erfindungsgemäß erstrecken sich die Lippen vertikal an den Seiten der Verladeöffnung, während sie unterhalb und/oberhalb der Verladeöffnung vorzugsweise waagerecht angeordnet sind. Die fahnenförmig vorstehenden flexiblen Lippen weichen beim Auftreffen auf ein Scharnier, einen Stoßfänger, einen Türfesthalter oder ähnliche vorstehender Fahrzeugteile aufgrund ihrer Flexibilität aus und bieten ausreichenden Raum zur Aufnahme solcher vorstehender Fahrzeugteile. Die flexiblen Lippen schmiegen sich an die Fahrzeugrückseite an und bilden eine wirksame Abdichtung an der Fahrzeugrückseite.

Die Breite der Dichtung kann so bemessen werden, dass die für einen Be- oder Endladevorgang geöffnete Rückseite eines vor der Verladeöffnung abgestellten Fahrzeuges vollständig an den fahnenförmig vorstehenden flexiblen Lippen der Dichtung anliegt.

Die Lippen weisen zweckmäßig ein keilförmiges Querschnittsprofil auf und bestehen vorzugsweise aus einem elastomeren Kunststoff.

Der Rücken und die vorstehenden flexiblen Lippen können als einstückiges Teil geformt sein, welches beispielsweise durch Spritzgießen oder Strangformen herstellbar ist.

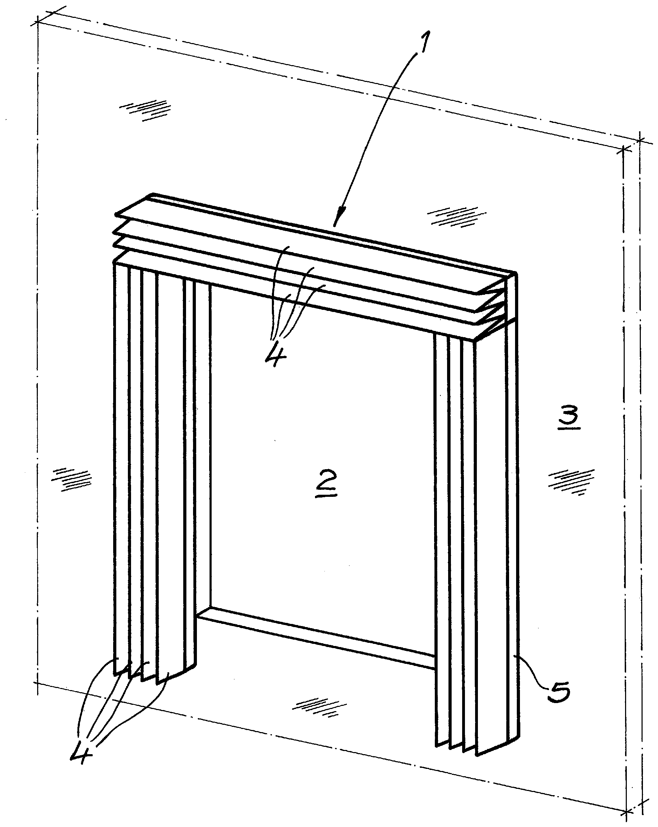

Im Folgenden wird die Erfindung anhand eines Ausführungsbeispiels beschrieben. Die einzige Figur zeigt schematisch eine Ausführungsform der erfindungsgemäßen Anordnung mit einer Dichtung 1 am Umfang einer Verladeöffnung 2. Sie ermöglicht eine Abdichtung zwischen einer die Verladeöffnung 2 umgebenden Wand 3 vor der Verladeöffnung abgestellten Fahrzeug gegen Witterungseinflüsse. Die Dichtung 1, welche den Abstand zwischen der Fahrzeugrückseite und einer die Verladeöffnung 2 umgebenden Gebäudewand 3 überbrückt, verhindert ferner Energieverluste beim Be- oder Entladen des Fahrzeuges und schützt das Ladegut gegen mögliche Beschädigung. Die Dichtung 1 ist an drei Seiten neben und über der Verladeöffnung 2 angeordnet und weist eine Mehrzahl nebeneinander angeordneter flexibler Lippen 4 auf. Die flexiblen Lippen 4 sind senkrecht zur Projektionsfläche der Verladeöffnung ausgerichtet und bilden fahnenförmig von der Wand 3 abstehende Elemente. An den Seiten der Verladeöffnung erstrecken sich die flexiblen Lippen vertikal über die gesamte Höhe oder einen Teil der Höhe der Verladeöffnung. Oberhalb der Verladeöffnung sind die flexiblen Lippen waagerecht ausgerichtet und erstrecken sich über die Breite oder einen Teil der Breite der Verladeöffnung. Aufgrund der Flexibilität der Lippen 4 bietet die in der Figur abgebildete Dichtung 1 ausreichenden Raum für vorstehende Fahrzeugteile, z. B. vorstehende Scharniere und/oder Stoßfänger.

Die Breite der Dichtung 1 ist so gewählt, dass die Rückseite eines vor der Verladeöffnung abgestellten Fahrzeuges vollständig an den vorstehenden flexiblen Lippen 4 der Dichtung 1 anliegt. Die Lippen 4 weisen zweckmäßig ein keilförmiges Querschnittsprofil auf und bestehen vorzugsweise aus einem elastomeren Kunststoff. Erfindungsgemäß weist die Dichtung 1 einen gebäudeseitig befestigten Rücken 5 und eine Mehrzahl parallel ausgerichteter flexibler Lippen 4 auf, die an ihrer Rückseite mit dem Rücken 5 verbunden sind und fahnenförmig vorstehen. Der Rücken 5 und die vorstehenden flexiblen Lippen 4 sind vorzugsweise als einstückiges Teil geformt. Alternativ besteht auch die Möglichkeit, dass die flexiblen Lippen als separate Elemente nebeneinander angeordnet werden und/oder lösbar an einem Träger befestigt sind.

## Patentansprüche

1. Anordnung mit einer Verladeöffnung (2), einer die Verladeöffnung umgebenden Wand (3) und einer Torabdichtung zur Abdichtung gegen Witterungseinflüsse zwischen der die Verladeöffnung umgebenden Wand (3) und einem vor der Verladeöffnung (2) positionierten Fahrzeug, wobei die Torabdichtung aus einer am Umfang der Verladeöffnung (2) wandseitig angeordneten Dichtung (1) besteht, wobei die Dichtung (1) zumindest an den beiden Seiten neben der Verladeöffnung angeordnet ist, und wobei die Dichtung (1) einen an der Wand (3) befestigten Rücken (5) und eine Mehrzahl nebeneinander angeordneter und parallel ausgerichteter flexibler Lippen (4) aufweist, die an ihrer Rückseite mit dem Rücken (5) verbunden sind, **dadurch gekennzeichnet, dass** die Lippen (4) sich an den Seiten der Verladeöffnung (2) vertikal erstrecken und fahnenförmig vorstehen.

2. Anordnung nach Anspruch 1, **dadurch gekennzeichnet, dass** die Dichtung (1) auch über der Verladeöffnung (2) angeordnet ist und die flexiblen Lippen (4) oberhalb der Verladeöffnung waagerecht ausgerichtet sind.

3. Anordnung nach Anspruch 1 oder 2, **dadurch gekennzeichnet, dass** die Dichtung (1) nur in einem oder mehreren Abschnitten am Umfang der Verladeöffnung (2) angeordnet ist.

4. Anordnung nach einem der Ansprüche 1 bis 3, **dadurch gekennzeichnet, dass** die Dichtung (1) unterhalb der Verladeöffnung (2) angeordnet ist.

5. Anordnung nach einem der Ansprüche 1 bis 4, **dadurch gekennzeichnet, dass** die flexiblen Lippen (4) senkrecht zur Verladeöffnung (2) ausgerichtet sind und einen Abstand zwischen einer die Verladeöffnung umgebenden Gebäudefläche (3) und einem vor der Verladeöffnung (2) positionierten Fahrzeug überbrücken.

6. Anordnung nach einem der Ansprüche 1 bis 5, **dadurch gekennzeichnet, dass** die Breite der Dichtung (1) so gewählt ist, dass die für einen Be- oder Entladevorgang geöffnete Rückseite eines vor der Verladeöffnung abgestellten Fahrzeugs vollständig an den vorstehenden flexiblen Lippen (4) der Dichtung (1) anliegt.

7. Anordnung nach einem der Ansprüche 1 bis 6, **dadurch gekennzeichnet, dass** die Lippen (4) ein keilförmiges Querschnittsprofil aufweisen.

8. Anordnung nach einem der Ansprüche 1 bis 7, **dadurch gekennzeichnet, dass** die Lippen (4) aus einem elastomeren Kunststoff bestehen.

9. Anordnung nach einem der Ansprüche 1 bis 8, **dadurch gekennzeichnet, dass** der Rücken (5) und die vorstehenden flexiblen Lippen (4) als einstückiges Teil geformt sind.

## Claims

1. An arrangement with a loading opening (2), a wall (3) surrounding the loading opening and a door seal for sealing against the effects of weathering between the wall (3) surrounding the loading opening and a vehicle positioned in front of the loading opening (2), wherein the door seal comprises a seal (1) arranged on the wall side at the periphery of the loading opening (2), wherein the seal (1) is arranged at least at the two sides beside the loading opening, and wherein the seal (1) comprises a back (5) fastened to the wall (3) and a plurality of flexible lips (4) arranged beside one another and aligned in parallel, which lips are connected at their rear side to the back (5), **characterised in that** the lips (4) extend vertically at the sides of the loading opening (2) and project in a flag-like manner.

2. The arrangement according to claim 1, **characterised in that** the seal (1) is also arranged above the loading opening (2) and the flexible lips (4) are aligned horizontally above the loading opening.

3. The arrangement according to claim 1 or 2, **characterised in that** the seal (1) is arranged only in one or more sections of the periphery of the loading opening (2).

4. The arrangement according to any of claims 1 to 3, **characterised in that** the seal (1) is arranged beneath the loading opening (2).

5. The arrangement according to any one of claims 1 to 4, **characterised in that** the flexible lips (4) are aligned perpendicular to the loading opening (2) and bridge over a gap between a building surface (3) surrounding the loading opening and a vehicle positioned in front of the loading opening (2).

6. The arrangement according to any one of claims 1 to 5, **characterised in that** the width of the seal (1) is selected such that the rear side of a vehicle parked in front of the loading opening, said rear side being opened for a loading or unloading operation, abuts completely against the projecting flexible lips (4) of the seal (1).

7. The arrangement according to any one of claims 1 to 6, **characterised in that** the lips (4) have a wedge-shaped cross-sectional profile.

8. The arrangement according to any one of claims 1 to 7, **characterised in that** the lips (4) are made of an elastomeric plastic.

9. The arrangement according to any one of claims 1 to 8, **characterised in that** the back (5) and the projecting flexible lips (4) are formed as a one-piece part.

## Revendications

1. Dispositif avec une ouverture de chargement (2), un mur (3) entourant l'ouverture de chargement, et un sas d'étanchéité pour l'étanchéification par rapport aux intempéries entre le mur (3) entourant l'ouverture de chargement et un véhicule positionné devant l'ouverture de chargement (2), dans lequel le sas d'étanchéité se compose d'un dispositif d'étanchéité (1) disposé du côté du mur sur le pourtour de l'ouverture de chargement (2), dans lequel le dispositif d'étanchéité (1) est disposé au moins sur les deux côtés à côté de l'ouverture de chargement, et dans lequel le dispositif d'étanchéité (1) présente un dos (5) fixé au mur (3) et une pluralité de lèvres flexibles (4) disposées côte à côte et orientées parallèlement, lesquelles sont reliées au dos (5) au niveau de leur côté arrière, **caractérisé en ce que** les lèvres (4) s'étendent verticalement au niveau des côtés de l'ouverture de chargement (2) et font saillie en forme de drapeau.

2. Dispositif selon la revendication 1, **caractérisé en ce que** le dispositif d'étanchéité (1) est également disposé au-dessus de l'ouverture de chargement (2) et que les lèvres flexibles (4) sont orientées horizontalement sur le haut de l'ouverture de chargement.

3. Dispositif selon la revendication 1 ou 2, **caractérisé en ce que** le dispositif d'étanchéité (1) est seulement disposé dans un ou plusieurs tronçons sur le pourtour de l'ouverture de chargement (2).

4. Dispositif selon l'une des revendications 1 à 3, **caractérisé en ce que** le dispositif d'étanchéité (1) est disposé au-dessous de l'ouverture de chargement (2) .

5. Dispositif selon l'une des revendications 1 à 4, **caractérisé en ce que** les lèvres flexibles (4) sont orientées perpendiculairement à l'ouverture de chargement (2) et enjambent un espace entre une surface de bâtiment (3) entourant l'ouverture de chargement (2) et un véhicule positionné devant l'ouverture de chargement (2).

6. Dispositif selon l'une des revendications 1 à 5, **caractérisé en ce que** la largeur du dispositif d'étanchéité (1) est sélectionnée de telle sorte que le côté arrière, ouvert pour un processus de chargement ou déchargement d'un véhicule stationné devant l'ouverture de chargement, repose complètement contre les lèvres flexibles (4) faisant saillie du dispositif d'étanchéité (1).

7. Dispositif selon l'une des revendications 1 à 6, **caractérisé en ce que** les lèvres (4) présentent un profil en section transversale cunéiforme.

8. Dispositif selon l'une des revendications 1 à 7, **caractérisé en ce que** les lèvres (4) se composent d'un plastique élastomère.

9. Dispositif selon l'une des revendications 1 à 8, **caractérisé en ce que** le dos (5) et les lèvres flexibles (4) faisant saille sont formées en tant que pièce d'un seul tenant.
